# EUROPEAN PATENT APPLICATION

(11) **EP 4 404 454 A1**
(43) Date of publication of application: **24.07.2024**
(21) Application number: 22869629.0
(22) Date of filing: 10.05.2022
(51) Int. Cl.: H02M 7/48

(54) **SEMICONDUCTOR MODULE OVERCURRENT DETECTION DEVICE, SEMICONDUCTOR MODULE USING SAME, AND SEMICONDUCTOR MODULE OVERCURRENT DETECTION METHOD**

(30) Priority: 17.09.2021 JP 2021152179
(71) Applicant: Hitachi Power Semiconductor Device, Ltd., Hitachi-shi, Ibaraki 319-1221 (JP)
(72) Inventor: MIMA, Akira, Tokyo 100-8280 (JP); KAGEYAMA, Hiroshi, Tokyo 100-8280 (JP); ARAI,Taiga, Hitachi-shi, Ibaraki 319-1221 (JP); SAITO, Katsuaki, Hitachi-shi, Ibaraki 319-1221 (JP); KAWASE, Daisuke, Hitachi-shi, Ibaraki 319-1221 (JP); WADA, Takashi, Hitachi-shi, Ibaraki 319-1221 (JP)
(74) Representative: Mewburn Ellis LLP
(86) International application number: PCT/JP2022/019825
(87) International publication number: WO 2023/042478

(57) **Abstract**

Provided is a semiconductor module overcurrent detection device that, with a relatively simple circuit configuration, is capable of highly accurately detecting short-circuit current of a power semiconductor element in a semiconductor module that is configured by connecting a plurality of inverter circuits in parallel. A semiconductor module overcurrent detection device according the present invention detects an overcurrent of a semiconductor module in a parallel connection configuration that has a first inverter circuit on which a first upper arm and a first lower arm are mounted and a second inverter circuit which is connected in parallel with the first inverter circuit and on which a second upper arm and a second lower arm are mounted. The semiconductor module overcurrent detection device is characterized in that: the first inverter circuit has a first output terminal between the emitter of the first upper arm and the collector of the first lower arm; the second inverter circuit has a second output terminal between the emitter of the second upper arm and the collector of the second lower arm; the first output terminal and the second output terminal are connected via a wire; an output wire to the outside is attached at the middle point between the first output terminal and the second output terminal; the wire inductance between the first output terminal and the middle point is substantially equal to the wire inductance between the second output terminal and the middle point; the potential difference between the first output terminal and the second output terminal is detected; and when the detected potential difference is larger than a predetermined threshold value, it is determined that an overcurrent is generated.

## Description

### Technical Field

The present invention relates to a configuration of a semiconductor module and an overcurrent detection method, and particularly relates to an effective technique applied to a large-capacity semiconductor module configured by connecting a plurality of the semiconductor modules in parallel.

### Background Art

In recent years, an inverter device as a power conversion device has been required to have high output. As a means for increasing the output, it is conceivable to operate a plurality of power semiconductor elements connected in parallel and output a large current.

The power conversion device has a function of converting DC power supplied from a DC power supply into AC power to be supplied to an AC electric load such as a rotating electrical machine, or a function of converting AC power generated by the rotating electrical machine into DC power to be supplied to the DC power supply.

In order to achieve a power conversion function, the power conversion device has a configuration in which inverter circuits having the plurality of power semiconductor elements are connected in parallel, and the power semiconductor elements repeat conduction operation and cutoff operation to perform power conversion from DC power to AC power or from AC power to DC power.

The semiconductor module constituting the inverter circuit is configured by connecting the plurality of power semiconductor elements to be mounted in parallel in order to obtain high output. For example, the plurality of power semiconductor elements are connected by common bus bar wiring.

An example of the power semiconductor element is an insulated gate bipolar transistor (hereinafter, referred to as an IGBT) .

In the inverter circuit, two IGBTs as the power semiconductor elements are connected in series and connected to the DC power supply. The IGBT connected to a positive electrode side of the DC power supply is referred to as an upper arm, and the IGBT connected to a negative electrode side of the DC power supply is referred to as a lower arm. Further, connection terminals of an upper arm IGBT and a lower arm IGBT are referred to as output terminals.

By alternately repeating ON/OFF of the IGBTs of the upper arm and the lower arm, AC power can be extracted from the output terminal. By connecting the plurality of inverter circuits equipped with IGBTs on such upper and lower arms in parallel, it is possible to perform power conversion from DC power to AC power or from AC power to DC power with higher output power.

In the inverter circuit including the power semiconductor elements connected in parallel, when one of the power semiconductor elements connected in parallel is broken due to gate noise or element lifetime during operation, an excessive short circuit current flows from the positive electrode of the DC power supply toward the broken element. When the short circuit current flows, even a normal power semiconductor element may be broken, and the entire inverter circuit system may be broken. In order to prevent this, a short circuit detection circuit that detects the short circuit current and generates a protection signal for turning off the normal power semiconductor element is provided.

In the short circuit detection circuit, there is a method for detecting by comparing a gate signal of the IGBT as the power semiconductor element and a collector voltage of the IGBT. When a gate voltage of the IGBT is on, the collector voltage decreases to an on-voltage of the IGBT in a normal operation, but the collector voltage increases to a power supply voltage at the time of short circuit. In a method using the collector voltage, it is detected that the collector voltage rises to a predetermined voltage, it is determined that the IGBT is short-circuited, and the protection signal is output.

However, when one IGBT is broken in the IGBTs connected in parallel, the short circuit current is shared by the IGBT connected in parallel on the opposite arm side, the collector voltage does not rise immediately, and short circuit detection may fail.

Further, as another method for detecting the short circuit, there is a method for detecting a voltage between both ends of a shunt resistor or a parasitic inductance for each of the IGBTs connected in parallel, determining that a short circuit occurs when a voltage value is a predetermined voltage or more, and generating the protection signal.

However, in the IGBTs connected in parallel, it is necessary to individually provide the detection circuit in each IGBT, and configuration of the protection circuit is complicated.

As a conventional technique of a method for detecting the short circuit of the power semiconductor elements connected in parallel, for example, PTL 1 is known. According to PTL 1, a separate current detection circuit is installed in each wire through which a drive signal flows between a drive circuit and each of semiconductor switch elements, and a polarity of each of currents detected by the current detection circuit is separately detected by a polarity detection circuit. It is described that when polarities of the currents detected do not match, or when any of the currents is larger than a predetermined value and detected polarities of the respective currents do not match, it is determined that an overcurrent has occurred in any of parallel semiconductor switch elements.

### Citation List

### Patent Literature

PTL 1: JP H10-42546 A

### Summary of Invention

### Technical Problem

However, in the detection method according to the above-described PTL 1, the detected current depends on a wire impedance of the drive signal. When the wire impedance of the drive signal is large, the detected current is small, and a signal to be detected is weak and may not be detected.

Therefore, an object of the present invention is to provide a semiconductor module overcurrent detection device capable of highly accurately detecting short circuit current of a power semiconductor element with a relatively simple circuit configuration in a semiconductor module configured by connecting a plurality of inverter circuits in parallel, a semiconductor module using the semiconductor module overcurrent detection device, and a semiconductor module overcurrent detection method.

### Solution to Problem

In order to solve the above problems, the present invention is a semiconductor module overcurrent detection device that detects an overcurrent of a semiconductor module having a parallel connection configuration including a first inverter circuit on which a first upper arm and a first lower arm are mounted, and a second inverter circuit which is connected in parallel with the first inverter circuit and on which a second upper arm and a second lower arm are mounted, in which the first inverter circuit has a first output terminal between an emitter of the first upper arm and a collector of the first lower arm, the second inverter circuit has a second output terminal between an emitter of the second upper arm and a collector of the second lower arm, the first output terminal and the second output terminal are connected by a wire, and an output wire to an outside is attached at a midpoint between the first output terminal and the second output terminal, a wire inductance between the first output terminal and the midpoint is substantially equal to a wire inductance between the second output terminal and the midpoint, and a potential difference between the first output terminal and the second output terminal is detected, and when the detected potential difference is larger than a predetermined threshold, it is determined that an overcurrent is generated.

Further, the present invention is a semiconductor module overcurrent detection method for detecting an overcurrent of a semiconductor module configured by connecting a plurality of inverter circuits in parallel and connecting output terminals of the inverter circuits to a common external output terminal, in which wire inductances of wires connecting the output terminals of the inverter circuits and the common external output terminal are substantially equal to each other, the method including: detecting a potential difference between the output terminals of the inverter circuits; and determining that an overcurrent is generated when the detected potential difference is larger than a predetermined threshold.

### Advantageous Effects of Invention

According to the present invention, it is possible to provide a semiconductor module overcurrent detection device capable of highly accurately detecting short circuit current of a power semiconductor element with a relatively simple circuit configuration in a semiconductor module configured by connecting a plurality of inverter circuits in parallel, a semiconductor module using the semiconductor module overcurrent detection device, and a semiconductor module overcurrent detection method.

Accordingly, reliability of the semiconductor module and the inverter device equipped with the semiconductor module can be improved.

Problems, configurations, and effects other than those described above will be clarified by the following description of embodiments.

### Brief Description of Drawings

[FIG. 1] FIG. 1 is a diagram illustrating a semiconductor module and a circuit configuration of an overcurrent detection circuit according to a first embodiment of the present invention.
[FIG. 2] FIG. 2 is a diagram illustrating an example of current and voltage waveforms when a short circuit current is generated according to a second embodiment of the present invention.
[FIG. 3] FIG. 3 is a top view of inverter circuits connected in parallel according to a third embodiment of the present invention.
[FIG. 4] FIG. 4 is a diagram illustrating the semiconductor module and the circuit configuration of the overcurrent detection circuit according to a fourth embodiment of the present invention.
[FIG. 5] FIG. 5 is a top view of the semiconductor module according to a fifth embodiment of the present invention.

### Description of Embodiments

Hereinafter, embodiments of the present invention will be described with reference to the drawings. Note that in the drawings, the same components are denoted by the same reference numerals, and detailed description of overlapping portions will be omitted.

### First embodiment

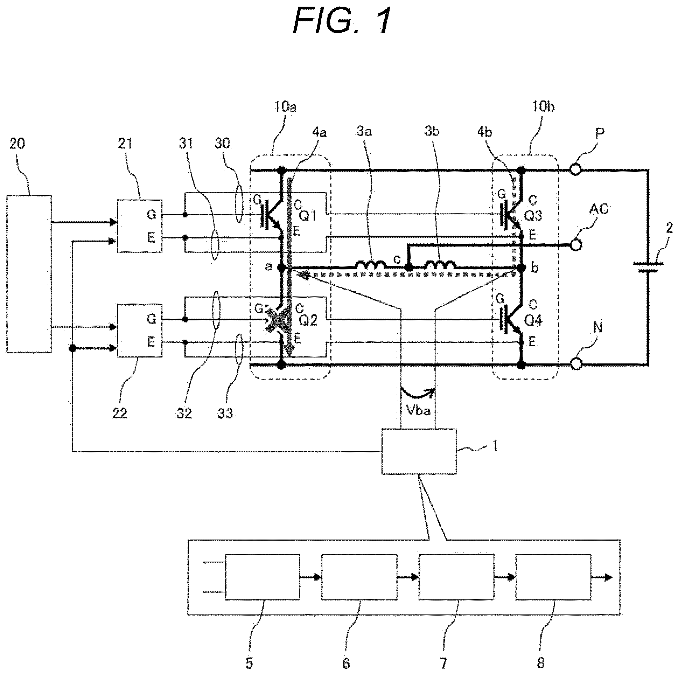

A semiconductor module overcurrent detection circuit and a semiconductor module overcurrent detection method according to a first embodiment of the present invention will be described with reference to FIG. 1. FIG. 1 is a diagram illustrating a semiconductor module and a circuit configuration of the overcurrent detection circuit of the present embodiment.

As illustrated in FIG. 1, the semiconductor module of the present embodiment includes a first inverter circuit 10a having an upper arm and a lower arm, and a second inverter circuit 10b also having an upper arm and a lower arm. The first inverter circuit 10a and the second inverter circuit 10b are connected in parallel to a DC power supply 2.

An IGBT element Q1 is disposed as a power semiconductor element in the upper arm of the first inverter circuit 10a, and an IGBT element Q2 is disposed as a power semiconductor element in the lower arm.

In addition, an IGBT element Q3 is disposed as a power semiconductor element in the upper arm of the second inverter circuit 10b, and an IGBT element Q4 is disposed as a power semiconductor element in the lower arm.

Collector (C) sides of the IGBT elements Q1 and Q3 of the upper arms of the first inverter circuit 10a and the second inverter circuit 10b are connected to a positive electrode terminal P of the DC power supply 2, and emitter (E) sides of the IGBT elements Q2 and Q4 of the lower arms of the first inverter circuit 10a and the second inverter circuit 10b are connected to a negative electrode terminal N of the DC power supply 2.

Further, the emitter (E) of the upper arm IGBT element Q1 and the collector (C) of the lower arm IGBT element Q2 of the first inverter circuit 10a are connected to a first wire inductance 3a at a node a (a first output terminal), and the emitter (E) of the upper arm IGBT element Q3 and the collector (C) of the lower arm IGBT element Q4 of the second inverter circuit 10b are connected to a second wire inductance 3b at a node b (a second output terminal).

Furthermore, the first wire inductance 3a and the second wire inductance 3b are connected at a midpoint c between the node a and the node b, and the midpoint c is connected to an output terminal AC to an outside via an output wire to the outside of the inverter circuits connected in parallel. Here, the first wire inductance 3a is configured to be substantially equal to the second wire inductance 3b. Note that the first wire inductance 3a and the second wire inductance 3b are configured by using, for example, a wire such as a conductor plate (a bus bar).

The first inverter circuit 10a and the second inverter circuit 10b are connected in parallel, and operate in accordance with a drive command from a common control circuit 20. Drive commands from the control circuit 20 are separated into an upper arm drive command and a lower arm drive command, the upper arm drive command is transmitted to an upper arm drive circuit 21, and the lower arm drive command is transmitted to a lower arm drive circuit 22.

According to the upper arm drive command, the upper arm drive circuit 21 controls the upper arm IGBT elements Q1 and Q3 connected in parallel via an upper arm positive electrode gate control terminal 30 connected to gates G of the upper arm IGBT elements Q1 and Q3 and an upper arm negative electrode gate control terminal 31 connected to emitters E of the upper arm IGBT elements Q1 and Q3.

Further, according to the lower arm drive command, the lower arm drive circuit 22 controls the lower arm IGBT elements Q2 and Q4 connected in parallel via a lower arm positive electrode gate control terminal 32 connected to gates G of the lower arm IGBT elements Q2 and Q4 and a lower arm negative electrode gate control terminal 33 connected to emitters E of the lower arm IGBT elements Q2 and Q4.

In a normal operation, the upper arm drive command and the lower arm drive command are provided with a dead time so as not to be simultaneously turned on, and the upper arm and the lower arm of the inverter circuits 10a and 10b connected in parallel are not simultaneously turned on.

However, the IGBT element constituting the lower arm is turned on in rare cases in a period in which the IGBT element constituting the upper arm is turned on due to gate noise, element lifetime, or the like.

FIG. 1 illustrates a case where the IGBT element Q2 of the lower arm is broken and short-circuited when the IGBT elements Q1 and Q3 constituting the upper arm are turned on and currents 4a and 4b flow.

In this case, the currents 4a and 4b flowing in the upper arm rapidly increase, the current 4a flows directly to the IGBT element Q2 via the node a, and the current 4b flows from the second wire inductance 3b to the first wire inductance 3a in this order via the node b and the node a, and finally joins the current 4a to flow to the IGBT element Q2.

When the current 4b flows from the second wire inductance 3b to the first wire inductance 3a in this order, a potential difference Vba is generated between the node a and the node b.

Therefore, in the present embodiment, overcurrent is detected by an overcurrent detection circuit 1 based on the potential difference Vba, and all the IGBT elements are controlled. The overcurrent detection circuit 1 includes a differential voltage measuring unit 5, an absolute value calculating unit 6, a threshold comparing unit 7, and a cutoff signal generating unit 8.

In the overcurrent detection circuit 1, the differential voltage measuring unit 5 measures the potential difference Vba, the absolute value calculating unit 6 calculates an absolute value of the potential difference Vba, the threshold comparing unit 7 determines that the overcurrent flows through the inverter circuit when the potential difference Vba is larger than a predetermined threshold voltage, the cutoff signal generating unit 8 generates a cutoff signal command, a cutoff command is sent to the upper arm drive circuit 21 and the lower arm drive circuit 22, and the upper arm drive circuit 21 and the lower arm drive circuit 22 perform control to turn off all the IGBT elements.

Note that when no short circuit occurs, a magnitude of current from a contact a to the midpoint c is equal to a magnitude of current from a contact b to the midpoint c. Here, since the first wire inductance 3a and the second wire inductance 3b are configured to be substantially equal to each other, potentials of the node a and the node b are equal to each other when no short circuit occurs, and the potential difference Vba is approximately zero.

Further, since detection of the short circuit is performed by detecting the potential difference Vba, the detection can be performed even when the first wire inductance 3a and the second wire inductance 3b are large.

As described above, the overcurrent detection circuit 1 detects the short circuit occurring in the semiconductor module, and quickly cuts off operation of all the IGBT elements, so that it is possible to prevent even normal power semiconductor elements from being broken, and to prevent the entire semiconductor module from being damaged and an inverter device equipped with the semiconductor module from malfunctioning.

Note that the overcurrent detection circuit 1 may be housed in the same module housing as the first inverter circuit 10a and the second inverter circuit 10b, or may be externally provided separately from the first inverter circuit 10a and the second inverter circuit 10b.

### Second embodiment

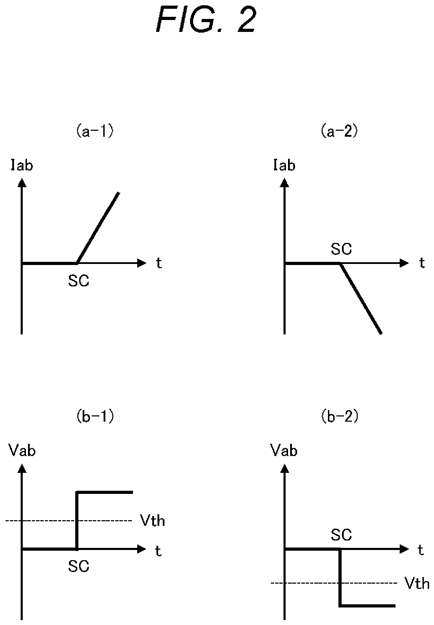

The semiconductor module overcurrent detection method according to a second embodiment of the present invention will be described with reference to FIG. 2. FIG. 2 is a diagram illustrating an example of current and voltage waveforms when a short circuit current is generated. A horizontal axis of each graph in FIG. 2 indicates time t, and the vertical axes Iab and Vab respectively indicate a current between the nodes a and b and a voltage between the nodes a and b. Further, SC indicates occurrence of the short circuit.

(a-1) of FIG. 2 illustrates the short circuit current when the IGBT element Q2 or Q3 of the inverter circuits connected in parallel illustrated in FIG. 1 is broken and short-circuited, and (b-1) of FIG. 2 illustrates a voltage change at that time. Further, (a-2) of FIG. 2 illustrates the short circuit current when the IGBT element Q1 or Q4 of the inverter circuits connected in parallel illustrated in FIG. 1 is broken and short-circuited, and (b-2) of FIG. 2 illustrates the voltage change at that time.

As illustrated in FIG. 1, when the IGBT element Q2 of the inverter circuit 10a connected in parallel is broken and short-circuited, as described in the first embodiment, the current flows from the node b toward the node a, and the potential difference Vba is generated between the node b and the node a. When a direction of the current flowing from the node b toward the node a is positive, the potential difference Vba has a positive value.

The first embodiment (FIG. 1) is a case where the IGBT element Q2 is short-circuited, but even when the IGBT element Q3 is broken and short-circuited, the short circuit current similarly flows from the node b toward the node a. Also in this case, the potential difference Vba is positive in the same manner.

On the other hand, when the IGBT element Q1 or the IGBT element Q4 in FIG. 1 is broken and the short circuit current is generated, the direction of the current between the nodes a and b is reversed (negative) as illustrated in (a-2) of FIG. 2, and the potential difference Vba between the nodes a and b is also a negative value.

Therefore, for example, when the threshold comparing unit 7 of the overcurrent detection circuit 1 determines whether the potential difference Vba is larger than a predetermined detection threshold voltage (Vth), it is possible to estimate which IGBT element is short-circuited by detecting whether the value of the potential difference Vba is positive or negative.

### Third embodiment

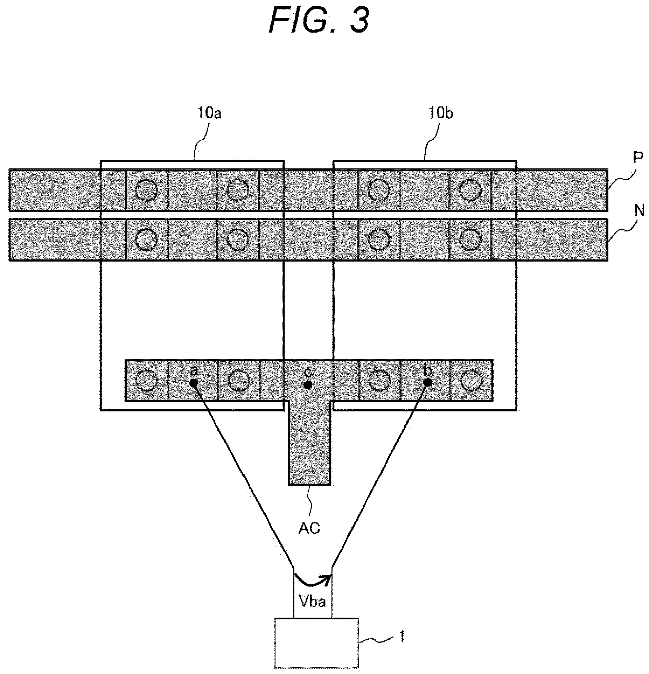

The semiconductor module overcurrent detection circuit according to a third embodiment of the present invention will be described with reference to FIG. 3. FIG. 3 is a top view of the inverter circuits connected in parallel according to the present embodiment.

FIG. 3 illustrates an example in which the first inverter circuit 10a and the second inverter circuit 10b described in the first embodiment (FIG. 1) are respectively housed in separate packages (module housings). Note that the IGBT elements in the upper and lower arms of the first inverter circuit 10a are housed in the same package. The same applies to the second inverter circuit 10b.

The first inverter circuit 10a and the second inverter circuit 10b illustrated in FIG. 3 are each equipped with the positive electrode terminal P, the negative electrode terminal N, and the output terminal AC, and are connected by a common wire bus bar.

The output terminal AC is led out at the midpoint c in order to equalize output wire inductances of the first inverter circuit 10a and the second inverter circuit 10b.

The overcurrent detection circuit 1 of the present embodiment detects the potential difference Vba between the node a of the first inverter circuit 10a and the node b of the second inverter circuit 10b.

Similarly to the first embodiment and the second embodiment, it is determined whether the current is the overcurrent according to the predetermined detection threshold voltage (Vth) based on the detected potential difference Vba.

### Fourth embodiment

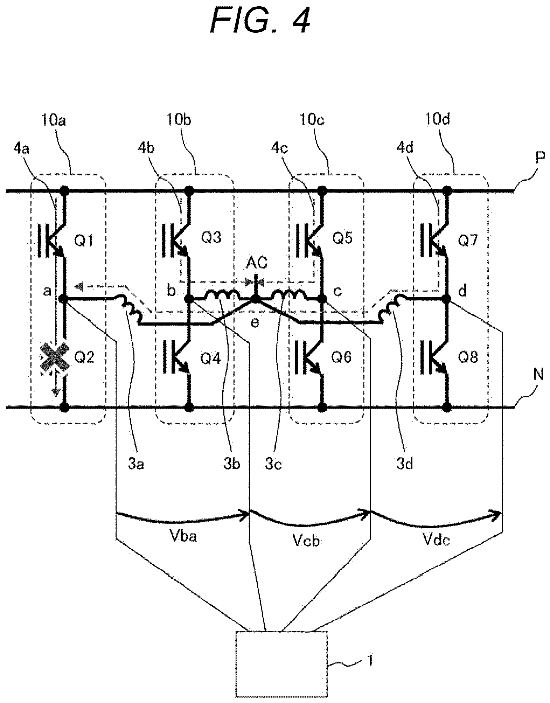

The semiconductor module overcurrent detection circuit and the semiconductor module overcurrent detection method according to a fourth embodiment of the present invention will be described with reference to FIG. 4. FIG. 4 is a diagram illustrating the semiconductor module and the circuit configuration of the overcurrent detection circuit of the present embodiment, and illustrates an example in which four inverter circuits are connected in parallel.

As illustrated in FIG. 4, the semiconductor module of the present embodiment is configured by connecting the first inverter circuit 10a, the second inverter circuit 10b, a third inverter circuit 10c, and a fourth inverter circuit 10d in parallel.

A node of a connection portion between the upper arm and the lower arm of the first inverter circuit 10a is denoted by a, a node of a connection portion between the upper arm and the lower arm of the second inverter circuit 10b is denoted by b, a connection portion between the upper arm and the lower arm of the third inverter circuit 10c is denoted by c, and a node of a connection portion between the upper arm and the lower arm of the fourth inverter circuit 10d is denoted by d. Each of the nodes a, b, c, and d is connected to a common output terminal AC to the outside at a node e.

The IGBT element Q1 is mounted on the upper arm of the first inverter circuit 10a, and the IGBT element Q2 is mounted on the lower arm. The IGBT element Q3 is mounted on the upper arm of the second inverter circuit 10b, and the IGBT element Q4 is mounted on the lower arm. An IGBT element Q5 is mounted on the upper arm of the third inverter circuit 10c, and an IGBT element Q6 is mounted on the lower arm. An IGBT element Q7 is mounted on the upper arm of the fourth inverter circuit 10d, and an IGBT element Q8 is mounted on the lower arm.

The overcurrent detection circuit 1 of the present embodiment has wire terminals for measuring voltages Vba, Vcb, and Vdc for the nodes a, b, c, and d between the upper and lower arms of each inverter circuit.

In the embodiment illustrated in FIG. 4, a case where the lower arm IGBT element Q2 of the first inverter circuit 10a is broken and short-circuited will be considered. When the IGBT element Q2 is broken and short-circuited, short circuit currents 4a, 4b, 4c, and 4d respectively flow from the IGBT elements Q1, Q3, Q5, and Q7 of the upper arm connected in parallel toward the IGBT element Q2.

Wire inductances 3a, 3b, 3c, and 3d are respectively provided between the nodes a, b, c, and d of the inverter circuits and a contact e with the output terminal AC.

The short circuit current 4a flows directly to the IGBT element Q2 via the node a. On the other hand, the short circuit currents 4b, 4c, and 4d respectively flow through the wire inductances 3b, 3c, and 3d, then join the wire inductance 3a, and finally flow to the IGBT element Q2.

The overcurrent detection circuit 1 monitors the voltages of the nodes a, b, c, and d, and measures differential voltages Vba, Vcb, and Vdc illustrated in FIG. 4. When the short circuit currents 4b, 4c, and 4d flow through the wire inductances 3a, 3b, 3c, and 3d, the differential voltages increase. When at least one of the differential voltages Vba, Vcb, and Vdc is larger than the predetermined detection threshold voltage (Vth), the overcurrent detection circuit 1 determines that the short circuit occurs in the inverter circuits connected in parallel, and outputs a signal command to turn off each IGBT element.

It is preferable that the wire inductances 3a, 3b, 3c, and 3d have substantially equal inductance values by equal length wiring or tournament-tree wiring.

Note that in the present embodiment, an example in which the four inverter circuits are connected in parallel has been described, but the present invention is also applicable to a case where three inverter circuits are connected in parallel or a case where five or more inverter circuits are connected in parallel.

In a parallel inverter circuit configuration in which the number of parallel connections N is two or more in parallel, the number of nodes between the upper and lower arms of each inverter circuit is N, and the number of wire inductances connected to the output terminal AC is also N. The number of voltage monitoring terminals of the overcurrent detection circuit 1 is N, and (N-1) differential voltages are detected.

### Fifth embodiment

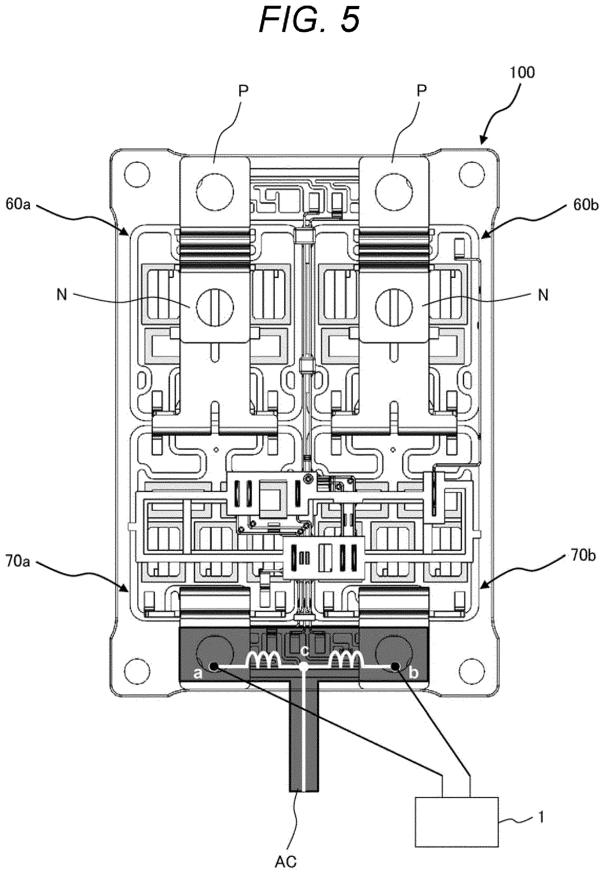

The semiconductor module according to a fifth embodiment of the present invention will be described with reference to FIG. 5. FIG. 5 is a top view of the semiconductor module according to the present embodiment.

In the semiconductor module illustrated in FIG. 5, a plurality of insulating substrates on which the IGBT elements are mounted are mounted on a base substrate 100.

A first insulating substrate 60a and a second insulating substrate 60b are electrically connected in parallel to constitute the upper arm. A third insulating substrate 70a and a fourth insulating substrate 70b are electrically connected in parallel to constitute the lower arm.

An equivalent circuit diagram of the semiconductor module in the present embodiment can be considered equivalent to that illustrated in FIG. 1, where it can be considered such that the IGBT element mounted on the first insulating substrate 60a is replaced with Q1, the IGBT element mounted on the second insulating substrate 60b is replaced with Q3, the IGBT element mounted on the third insulating substrate 70a is replaced with Q2, and the IGBT element mounted on the fourth insulating substrate 70b is replaced with Q4. Therefore, it can also be said that the semiconductor module illustrated in FIG. 5 has a configuration in which the first inverter circuit 10a and the second inverter circuit 10b are housed in one same module housing.

The positive electrode terminal P is connected to the collector side of the insulating substrates 60a and 60b of the upper arm, and the negative electrode terminal N is connected to the emitter side of the insulating substrates 70a and 70b of the lower arm. The output terminal AC to the outside is connected between the emitter side of the insulating substrates 60a and 60b of the upper arm and the collector side of the insulating substrates 70a and 70b of the lower arm.

The node a connecting the emitter side of the first insulating substrate 60a of the upper arm and the collector side of the third insulating substrate 70a of the lower arm, and the node b connecting the emitter side of the second insulating substrate 60b of the upper arm and the collector side of the fourth insulating substrate 70b of the lower arm are connected to the output terminal AC at the midpoint c.

Similarly to FIG. 1, the overcurrent detection circuit 1 of the present embodiment measures a voltage difference between the node a and the node b, and when the voltage difference is larger than the predetermined detection threshold voltage (Vth), the overcurrent detection circuit 1 determines that the IGBT element on the insulating substrate mounted on the semiconductor module is short-circuited, and outputs the cutoff command of the IGBT element.

Note that the present invention is not limited to the above-described embodiments, and includes various modifications. For example, the above-described embodiments have been described in detail for easy understanding of the present invention, and are not necessarily limited to those having all described configurations. Further, a part of configuration of a certain embodiment can be replaced with a configuration of another embodiment, and a configuration of another embodiment can be added to a configuration of a certain embodiment. Furthermore, another configuration can be added to, deleted from, or substituted for a part of configuration of each embodiment.

### Reference Signs List

1 overcurrent detection circuit
2 DC power supply
3a, 3b, 3c, 3d wire inductance (of output terminal)
4a, 4b, 4c, 4d (short circuit) current
5 differential voltage measuring unit
6 absolute value calculating unit
7 threshold comparing unit
8 cutoff signal generating unit
10a, 10b, 10c, 10d inverter circuit
20 control circuit
21 upper arm drive circuit
22 lower arm drive circuit
30 upper arm positive electrode gate control terminal
31 upper arm negative electrode gate control terminal
32 lower arm positive electrode gate control terminal
33 lower arm negative electrode gate control terminal
60a, 60b (upper arm) insulating substrate
70a, 70b (lower arm) insulating substrate
100 base substrate
Q1, Q2, Q3, Q4, Q5, Q6, Q7, Q8 IGBT element
C collector
E emitter
G gate
P positive electrode terminal
N negative electrode terminal
AC (external) output terminal
SC occurrence of short circuit
Iab(Iba) current between nodes a and b
Vab(Vba) voltage between nodes a and b
Vth detection threshold voltage

## Claims

1. A semiconductor module overcurrent detection device that detects an overcurrent of a semiconductor module having a parallel connection configuration including a first inverter circuit on which a first upper arm and a first lower arm are mounted, and a second inverter circuit which is connected in parallel with the first inverter circuit and on which a second upper arm and a second lower arm are mounted, wherein
the first inverter circuit has a first output terminal between an emitter of the first upper arm and a collector of the first lower arm,
the second inverter circuit has a second output terminal between an emitter of the second upper arm and a collector of the second lower arm,
the first output terminal and the second output terminal are connected by a wire, and an output wire to an outside is attached at a midpoint between the first output terminal and the second output terminal,
a wire inductance between the first output terminal and the midpoint is substantially equal to a wire inductance between the second output terminal and the midpoint, and
a potential difference between the first output terminal and the second output terminal is detected, and when the detected potential difference is larger than a predetermined threshold, it is determined that an overcurrent is generated.

2. The semiconductor module overcurrent detection device according to claim 1, wherein the first inverter circuit and the second inverter circuit are housed in one same module housing.

3. The semiconductor module overcurrent detection device according to claim 1, wherein the first inverter circuit and the second inverter circuit are respectively housed in separate module housings.

4. The semiconductor module overcurrent detection device according to claim 1, wherein a short circuit point of the first inverter circuit and the second inverter circuit is identified based on a positive and negative polarity of the potential difference between the first output terminal and the second output terminal.

5. The semiconductor module overcurrent detection device according to claim 1, wherein when the potential difference between the first output terminal and the second output terminal is larger than a predetermined threshold voltage, a cutoff signal command for turning off all power semiconductor elements of the first inverter circuit and the second inverter circuit is output.

6. The semiconductor module overcurrent detection device according to claim 1, wherein
the semiconductor module further includes:
a third inverter circuit which is connected in parallel with the first inverter circuit and the second inverter circuit and on which a third upper arm and a third lower arm are mounted; and
a fourth inverter circuit which is connected in parallel with the third inverter circuit and on which a fourth upper arm and a fourth lower arm are mounted,
the third inverter circuit has a third output terminal between an emitter of the third upper arm and a collector of the third lower arm,
the fourth inverter circuit has a fourth output terminal between an emitter of the fourth upper arm and a collector of the fourth lower arm,
the first output terminal, the second output terminal, the third output terminal, and the fourth output terminal are connected by a wire, and an output wire to an outside is attached at a midpoint between the first output terminal, the second output terminal, the third output terminal, and the fourth output terminal,
a wire inductance between the first output terminal and the midpoint, a wire inductance between the second output terminal and the midpoint, a wire inductance between the third output terminal and the midpoint, and a wire inductance between the fourth output terminal and the midpoint are substantially equal to each other, and
a potential difference between the first output terminal and the second output terminal, a potential difference between the second output terminal and the third output terminal, and a potential difference between the third output terminal and the fourth output terminal are detected, and when at least one of the detected potential differences is larger than a predetermined threshold, it is determined that an overcurrent is generated.

7. A semiconductor module comprising the semiconductor module overcurrent detection device according to any one of claims 1 to 6.

8. A semiconductor module overcurrent detection method for detecting an overcurrent of a semiconductor module configured by connecting a plurality of inverter circuits in parallel and connecting output terminals of the inverter circuits to a common external output terminal, wherein
wire inductances of wires connecting the output terminals of the inverter circuits and the common external output terminal are substantially equal to each other,
the method comprising:
detecting a potential difference between the output terminals of the inverter circuits; and
determining that an overcurrent is generated when the detected potential difference is larger than a predetermined threshold.

9. The semiconductor module overcurrent detection method according to claim 8, wherein a short circuit point of the plurality of inverter circuits is identified based on a positive and negative polarity of a potential difference between the output terminals of the inverter circuits or a potential difference between the output terminals of the inverter circuits and the common external output terminal.

10. The semiconductor module overcurrent detection method according to claim 8, wherein when a potential difference between the output terminals of the inverter circuits or a potential difference between the output terminals of the inverter circuits and the common external output terminal is larger than a predetermined threshold voltage, a cutoff signal command for turning off all power semiconductor elements of the plurality of inverter circuits is output.
